# EUROPÄISCHE PATENTANMELDUNG

(11) **EP 2 629 243 A1**
(43) Veröffentlichungstag der Anmeldung: **21.08.2013**
(21) Anmeldenummer: 12000978.2
(22) Anmeldetag: 15.02.2012
(51) Int. Cl.: G06K 9/46

(54) **Verfahren zum Erkennen und Verfolgen von Fahrspurmarkierungen**

(71) Anmelder: Delphi Technologies, Inc., Troy, Michigan 48007 (US)
(72) Erfinder: Nunn, Christian Markus, 42117 Wuppertal (DE); Meuter, Mirko Nicolas, 40699 Erkrath (DE); Müller, Dennis, 40699 Erkrath (DE); Görmer, Steffen, 42881 Wuppertal (DE)
(74) Vertreter: Manitz, Finsterwald & Partner GbR

(57) **Zusammenfassung**

Bei einem Verfahren zum Erkennen und Verfolgen von Fahrspurmarkierungen von einem Kraftfahrzeug aus wird mittels einer Bilderfassungseinrichtung in regelmäßigen Zeitabständen ein Bild eines vor dem Kraftfahrzeug befindlichen Verkehrsraumes erfasst. In dem erfassten Bild werden diejenigen Bildbereiche als erkannte Fahrspurmarkierungen identifiziert, welche ein vorgegebenes Erkennungskriterium erfüllen. Wenigstens eine erkannte Fahrspurmarkierung wird als zu verfolgende Fahrspurmarkierung einem Tracking-Prozess unterzogen. Es wird für jede erkannte Fahrspurmarkierung wenigstens ein Prüfbereich im Bild definiert. Anhand von Intensitätswerten der dem Prüfbereich zugehörigen Bildpunkte wird wenigstens eine Kenngröße ermittelt. In Abhängigkeit von der Kenngröße wird die erkannte Fahrspurmarkierung einer von mehreren Fahrspurmarkierungs-Klassen zugeordnet.

## Beschreibung

Die vorliegende Erfindung betrifft ein Verfahren zum Erkennen und Verfolgen von Fahrspurmarkierungen von einem Kraftfahrzeug aus, an welchem eine Bilderfassungseinrichtung angeordnet ist, wobei mittels der Bilderfassungseinrichtung in regelmäßigen Zeitabständen ein mehrere Bildpunkte umfassendes Bild eines vor dem Kraftfahrzeug befindlichen Verkehrsraumes erfasst wird, mittels eines Bildverarbeitungssystems in dem erfassten Bild diejenigen Bildbereiche als erkannte Fahrspurmarkierungen identifiziert werden, welche ein vorgegebenes Erkennungskriterium erfüllen, und wenigstens eine erkannte Fahrspurmarkierung als zu verfolgende Fahrspurmarkierung einem Tracking-Prozess unterzogen wird, bei welchem die zeitliche Änderung des Verlaufs der Fahrspurmarkierung in der Fahrbahnebene mittels eines Zustandsschätzers verfolgt wird.

Das Tracking von Fahrspurmarkierungen ist für verschiedene Arten von Fahrerassistenzsystemen in modernen Kraftfahrzeugen bedeutsam. Beispielsweise kann ein Spurhalteassistent (lane departure warning, LDW) das Tracking von Fahrspurmarkierungen dazu verwenden, die Position des Kraftfahrzeugs innerhalb der Fahrspur zu bestimmen und bei einem zu starken Annähern an den Fahrspurrand ein Warnsignal auszugeben. Es sind auch Systeme zur Spurhalteunterstützung (lane keeping support, LKS) bekannt, welche das Halten der aktuellen Fahrspur durch einen kontinuierlichen Lenk-, Brems- und/oder Antriebsstrangeingriff unterstützen.

Zustandsschätzer dienen der näherungsweisen Projektion eines Systemzustands in die Zukunft und sind auf dem Fachgebiet grundsätzlich bekannt. Konkret besitzt ein bei dem erfindungsgemäßen Verfahren eingesetzter Zustandsschätzer eine Prädiktor-Korrektor-Struktur.

Insbesondere bei einem gleichzeitigen Überwachen mehrerer Fahrspuren ist es schwierig, alle im Bild vorhandenen Fahrspurmarkierungen korrekt zu erkennen. Es gibt nämlich Bildobjekte, welche das Erkennungskriterium erfüllen, aber keine gültigen Fahrspurmarkierungen darstellen. Beispielsweise können Leitplanken oder Teernähte als Fahrspurmarkierungen erkannt und fälschlicherweise verfolgt werden. Ein derartiges Fehltracking kann die Leistungsfähigkeit eines Fahrerassistenzsystems erheblich beeinträchtigen.

Der vorliegenden Erfindung liegt daher die Aufgabe zugrunde, ein Verfahren der eingangs genannten Art zur Verfügung zu stellen, welches hinsichtlich der Erkennung von Fahrspurmarkierungen robuster ist und welches auch in komplexen Verkehrssituationen zuverlässige Ergebnisse liefert.

Diese Aufgabe wird erfindungsgemäß durch ein Verfahren mit den Merkmalen des Anspruchs 1 gelöst.

Erfindungsgemäß wird für jede erkannte Fahrspurmarkierung wenigstens ein mehrere Bildpunkte des Bildes umfassender Prüfbereich definiert. Anhand von Intensitätswerten der dem Prüfbereich zugehörigen Bildpunkte wird wenigstens eine Kenngröße ermittelt. Die erkannte Fahrspurmarkierung wird in Abhängigkeit von der Kenngröße einer von mehreren Fahrspurmarkierungs-Klassen zugeordnet.

Durch das Einteilen der erkannten Fahrpurmarkierungen in verschiedene Klassen können auch unübersichtliche Situationen bewältigt werden. Bei der als Zuordnungskriterium verwendeten Kenngröße kann es sich um ein beliebiges Bildmerkmal handeln, das mittels einfacher Rechenoperationen oder auch mittels komplexer Bildverarbeitungsverfahren aus den Pixeln des Prüfbereichs ermittelt wird. Es ist darauf hinzuweisen, dass die Kenngröße vorzugsweise von dem Erkennungskriterium unabhängig ist, also einer zusätzlichen, insbesondere erweiterten Überprüfung einer zuvor erkannten Fahrspurmarkierung dient. Unterschiedliche Arten von Fahrspurmarkierungen können somit auf einfache Weise voneinander unterschieden werden. Insbesondere können aus allen potentiellen Fahrspurmarkierungen oder Markierungskandidaten die tatsächlichen gültigen Markierungen herausgefiltert werden. Die Leistungsfähigkeit des Trackingsystems kann somit beträchtlich gesteigert werden.

Vorteilhafte Ausführungsformen der Erfindung können den abhängigen Ansprüchen sowie der nachfolgenden Beschreibung entnommen werden.

Gemäß einer Ausgestaltung der Erfindung wird jede erkannte Fahrspurmarkierung in Abhängigkeit von der Fahrspurmarkierungs-Klasse, welcher sie zugeordnet ist, als zu verfolgende Fahrspurmarkierung dem Tracking-Prozess unterzogen oder als ungültige Fahrspurmarkierung verworfen. D.h. es findet eine Verifizierung der erkannten Fahrspurmarkierungen statt. Dadurch können "falsche Kandidaten" wie Leitplanken und Teernähte vom Tracking ausgeschlossen werden, was zu einer höheren Robustheit des Systems führt.

Die erkannten Fahrspurmarkierungen können jeweils als Ganzes der entsprechenden Fahrspurmarkierungs-Klasse zugeordnet werden. Alternativ kann die Zuordnung jedoch auch abschnittsweise erfolgen. D.h. die Fahrspurmarkierung wird entlang ihres Verlaufs in mehrere Abschnitte unterteilt, wobei jeder Abschnitt für sich einer Fahrspurmarkierungs-Klasse zugeordnet wird. Hierbei kann ein nahe am Kraftfahrzeug befindlicher Abschnitt einer Fahrspurmarkierung einer anderen Klasse zugeordnet werden als ein weiter vom Kraftfahrzeug entfernter Abschnitt der gleichen Fahrspurmarkierung. Hierdurch kann die Robustheit des Systems weiter gesteigert werden, indem eine Fahrspurmarkierung z.B. bei eingeschränkter Sicht oder vorhandenen Verdeckungen lediglich im Nahbereich des Kraftfahrzeugs als zu verfolgende Fahrspurmarkierung bestätigt wird, während sie im Fernbereich hingegen abgelehnt, d.h. als ungültig verworfen wird.

Bevorzugt wird die Lage des Prüfbereichs innerhalb des Bildes bestimmt, indem die Position einer verfolgten Fahrspurmarkierung in der Fahrbahnebene in einer vorbestimmten Entfernung vom Kraftfahrzeug mittels eines Projektionsverfahrens in Bildkoordinaten umgerechnet wird. Eine erkannte Fahrspurmarkierung wird auf diese Weise mit bereits verfolgten, d.h. dem Tracking-Prozess unterzogenen, Fahrspurmarkierungen abgeglichen.

Gemäß einer Ausgestaltung der Erfindung wird aus den Intensitätswerten der dem Prüfbereich zugehörigen Bildpunkte wenigstens eine statistische Kenngröße, vorzugsweise mehrere statistische Kenngrößen, beispielsweise ein mittlerer Intensitätswert, eine Intensitätswertsumme, ein maximaler Intensitätswert, ein minimaler Intensitätswert und/oder wenigstens ein Moment der Intensitätswertverteilung der Bildpunkte, ermittelt. Bei den Intensitätswerten handelt es sich typischerweise um die digitalen Grauwerte oder Farbwerte der einzelnen Pixel des Bildsensors. Durch die statistische Analyse des ausgedehnten Prüfbereichs ist eine zuverlässige Überprüfung des Erscheinungsbilds der erkannten Fahrspurmarkierung und somit eine zuverlässige Klasseneinteilung möglich. Zur statistischen Analyse können weiterhin auch Hu-Momente, Schiefe, minimaler oder maximaler Gradient, Histogramme, Quantile von Histogrammen und/oder Histogramme von Gradienten herangezogen werden.

Grundsätzlich können auch charakteristische Parameter wie die Breite einer Fahrspurmarkierung als Kenngrößen verwendet werden.

Gemäß einer Ausführungsform der Erfindung wird die Kenngröße für mehrere aufeinanderfolgende Bilder ermittelt und die Zuordnung der erkannten Fahrspurmarkierung zu der Fahrspurmarkierungs-Klasse erfolgt zusätzlich anhand des zeitlichen Verlaufs der Kenngröße. Dies ermöglicht eine weiter verfeinerte Klasseneinteilung, da das Zeitverhalten der Kenngröße wichtige Informationen hinsichtlich des Erscheinungsbilds der erkannten Fahrspurmarkierung beinhaltet. Beispielsweise können durchgezogene Fahrspurmarkierungen und gestrichelte Fahrspurmarkierungen besonders gut anhand einer zeitlichen Analyse unterschieden werden.

Vorzugsweise wird die aktuelle Geschwindigkeit des Kraftfahrzeugs ermittelt, wobei anhand der Geschwindigkeit der zeitliche Verlauf der Kenngröße in einen örtlichen Verlauf der Kenngröße in der Fahrbahnebene umgerechnet wird, und wobei die Zuordnung der erkannten Fahrspurmarkierung zu der Fahrspurmarkierungs-Klasse anhand des örtlichen Verlaufs der Kenngröße erfolgt. Die Kenngröße wird also als Funktion der von dem Kraftfahrzeug zurückgelegten Fahrstrecke betrachtet, was hinsichtlich der Bewertung des Erscheinungsbilds der Fahrspurmarkierung günstiger ist. Durch die Betrachtung der Kenngröße im Ortsraum kann außerdem besonders einfach eine Eigenbewegungskompensation durchgeführt werden. Gemäß einer weiteren Ausgestaltung der Erfindung wird zur Charakterisierung des zeitlichen Verlaufs der Kenngröße eine statistische Verlaufsmaßzahl ermittelt, insbesondere ein Mittelwert, eine Standardabweichung oder eine Varianz, wobei die Zuordnung der erkannten Fahrspurmarkierung zu der Fahrspurmarkierungs-Klasse anhand der statistischen Verlaufsmaßzahl erfolgt. Die Klasseneinteilung der erkannten Fahrspurmarkierungen kann so z.B. auf einer durch die Kenngröße gegebenen örtlichen Statistik und zusätzlich auf einer durch die Verlaufsmaßzahl gegebenen zeitlichen Statistik beruhen. Dies ermöglicht eine nochmals erweiterte Analyse des Erscheinungsbilds der zu überprüfenden Fahrspurmarkierung. Die Charakterisierung des zeitlichen Verlaufs der Kenngröße kann auch auf einem gleitenden Mittelwert und/oder einem Filter beruhen.

Der zeitliche Verlauf der Kenngröße kann des Weiteren einer Zeit-Frequenz-Transformation unterzogen werden, insbesondere einer Fourier-Transformation oder einer Haar-Transformation, wobei die Zuordnung der erkannten Fahrspurmarkierung zu der Fahrspurmarkierungs-Klasse anhand der im Rahmen der Zeit-Frequenz-Transformation ermittelten Transformations-Koeffizienten erfolgt. Z.B. können die entsprechenden Fourier-Koeffizienten oder Haar-Koeffizienten bei der vorstehend beschriebenen Charakterisierung des zeitlichen Verlaufs der Kenngröße als statistische Verlaufsmaßzahlen dienen. Ein Vorteil der Haar- Transformation besteht darin, dass die zugehörigen Berechnungen einfach und schnell durchzuführen sind. Insbesondere eignet sich die Haar- Transformation gut für die Behandlung von Rechteckfunktionen. Dies kommt der Erkennung von gestrichelten Fahrspurmarkierungen entgegen.

Die Zeit-Frequenz-Transformation kann iterativ durchgeführt werden. D.h. es wird ein sich verschiebendes Zeitfenster beobachtet, wobei lediglich neue Werte hinzugefügt und ältere Werte dementsprechend abgewichtet werden. Hierdurch kann insbesondere der Rechenaufwand verringert werden.

Vorzugsweise wird für jede erkannte Fahrspurmarkierung ein Satz von mehreren Prüfbereichen definiert, welche jeweils der Position einer verfolgten Fahrspurmarkierung in der Fahrbahnebene in unterschiedlichen Entfernungen vom Kraftfahrzeug entsprechen. Die Fahrspurmarkierung wird somit nicht nur isoliert an einem Punkt, sondern entlang ihres Verlaufs beurteilt. Beim Definieren des Satzes von Prüfbereichen kann insbesondere ein gleichmäßiger Abstand zwischen den Positionen der verfolgten Fahrspurmarkierung in der Fahrbahnebene gewählt werden.

Gemäß einer Ausgestaltung der Erfindung werden für jede erkannte Fahrspurmarkierung wenigstens 5 und bevorzugt wenigstens 15 Prüfbereiche definiert. Dadurch ist eine zuverlässige Überprüfung der erkannten Fahrspurmarkierung entlang ihres Verlaufs gewährleistet.

Die erkannte Fahrspurmarkierung kann einer Fahrspurmarkierungs-Klasse aus einer Gruppe von Fahrspurmarkierungs-Klassen zugeordnet werden, welche die Klassen "ungültiges Bildobjekt", "einzelne durchgezogene Linie", "doppelte durchgezogene Linie", "einzelne gestrichelte Linie", "doppelte gestrichelte Linie", "gestrichelte und durchgezogene Linie", "breite gestrichelte Linie" und "Linie mit Oberflächenprofil" umfasst. Dadurch können nicht nur tatsächliche Fahrspurmarkierungen von Artefakten unterschieden werden, sondern ein zugehöriges Fahrerassistenzsystem kann auch mehrere Fahrspuren verwalten und dabei z.B. normale Fahrspuren von Autobahn-Ausfahrtsspuren unterscheiden. Auch können haptische Markierungen (botts' dots), Lücken zwischen gestrichelten Markierungen und ähnliche schwierig zu erkennende Objekte gehandhabt werden.

Gemäß einer weiteren Ausgestaltung der Erfindung werden für den oder jeden Prüfbereich wenigstens 5 und bevorzugt wenigstens 10 unterschiedliche Kenngrößen ermittelt, wobei insbesondere das Zuordnen der erkannten Fahrspurmarkierungen zu einer Fahrspurmarkierungs-Klasse anhand einer Untergruppe der Kenngrößen erfolgt, welche durch ein Klassifizierungsverfahren ausgewählt wird. Z.B. kann ein Klassifikator-Modul wahrscheinlichkeitsgebunden anhand mehrerer Merkmale entscheiden, welcher Klasse die erkannte Fahrspurmarkierung zuzuordnen ist. Dies ermöglicht auch eine Einteilung in Klassen mit ähnlichem Verlaufsmuster, wie z.B. "einzelne durchgezogene Linie" und "doppelte durchgezogene Linie".

Das Klassifizierungsverfahren kann ein neuronales Netz und/oder eine Support Vector Machine verwenden. Dies ermöglicht ein "Einlernen" des Systems, um so unter Verarbeitung einer Vielzahl von Kenngrößen und/oder Verlaufsmaßzahlen eine Vielzahl von Fahrspurmarkierungs-Klassen zu verwalten.

Eine weitere Ausgestaltung der Erfindung sieht vor, dass jeweilige Kenngrößen von mehreren Prüfbereichen einer erkannten Fahrspurmarkierung in unterschiedlichen Entfernungen vom Kraftfahrzeug und/oder jeweilige Kenngrößen eines einzelnen Prüfbereichs in aufeinanderfolgenden Bildern miteinander verglichen und anhand des Ergebnisses des Vergleichs zu einer gemeinsamen Kenngröße zusammengeführt werden, wobei bevorzugt anhand des Ergebnisses des Vergleichs ein statistisches Konfidenzmaß berechnet und der erkannten Fahrspurmarkierung zugeordnet wird. Eine derartige Fusion ermöglicht eine Konsistenzprüfung, durch welche die Robustheit des Verfahrens beträchtlich erhöht werden kann.

Die Erfindung betrifft auch ein Computerprogramm mit Programmcodemitteln zur Durchführung eines wie vorstehend beschriebenen Verfahrens, wenn das Computerprogramm auf einem Computer oder einer entsprechenden Recheneinheit ausgeführt wird.

Weiterhin betrifft die Erfindung ein Computerprogrammprodukt mit Programmcodemitteln, die auf einem computerlesbaren Datenträger gespeichert sind, zur Durchführung eines wie vorstehend beschriebenen Verfahrens, wenn das Computerprogramm auf einem Computer oder einer entsprechenden Recheneinheit ausgeführt wird.

Schließlich betrifft die Erfindung auch eine Vorrichtung zum Erkennen und Verfolgen von Fahrspurmarkierungen von einem Kraftfahrzeug aus, mit einer an dem Kraftfahrzeug angeordneten Bilderfassungseinrichtung zur Aufnahme eines Bildes und einer Datenverarbeitungseinrichtung, die zur Durchführung des oben genannten Verfahrens ausgebildet ist.

Die Erfindung wird nachfolgend beispielhaft unter Bezugnahme auf die beigefügten Figuren beschrieben.
- Fig. 1: zeigt eine Draufsicht auf einen Verkehrsraum mit einem Kraftfahrzeug, welches eine erfindungsgemäße Vorrichtung zum Erkennen und Verfolgen von Fahrspurmarkierungen umfasst.
- Fig. 2: zeigt ein erstes beispielhaftes Bild, welches durch eine an dem Kraftfahrzeug gemäß Fig. 1 angeordnete Bilderfassungseinrichtung aufgenommen wurde.
- Fig. 3: zeigt ein zweites beispielhaftes Bild, welches durch eine an dem Kraftfahrzeug gemäß Fig. 1 angeordnete Bilderfassungseinrichtung aufgenommen wurde.
- Fig. 4: zeigt eine Fahrspurmarkierung zu drei aufeinanderfolgenden Zeitpunkten während der Fahrt des Kraftfahrzeugs gemäß Fig. 1.

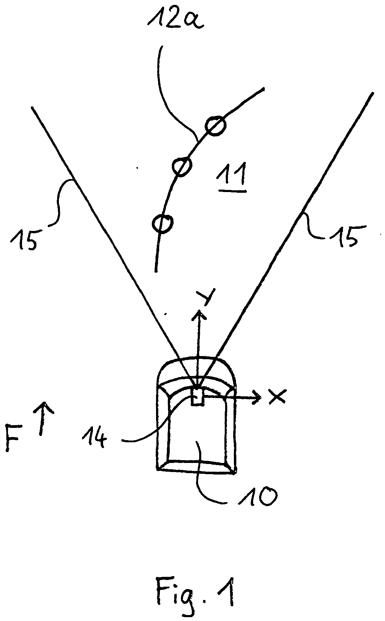

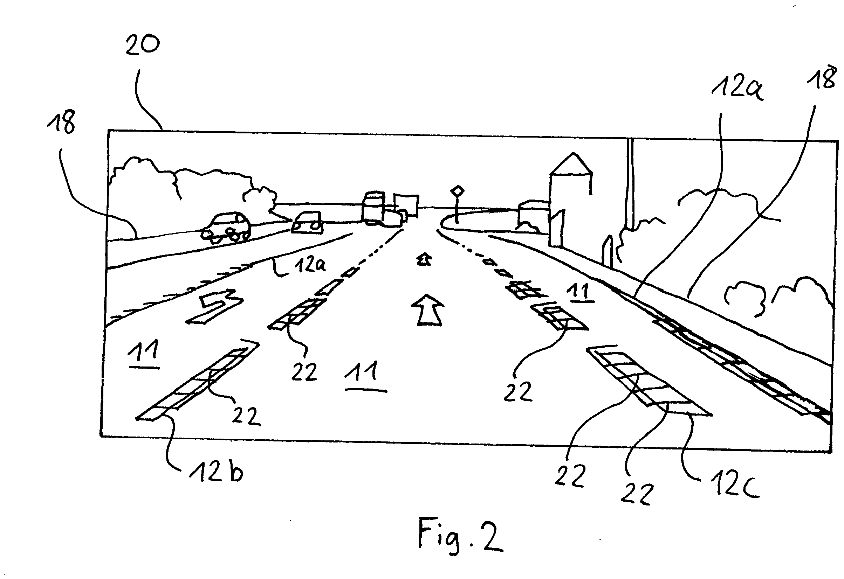

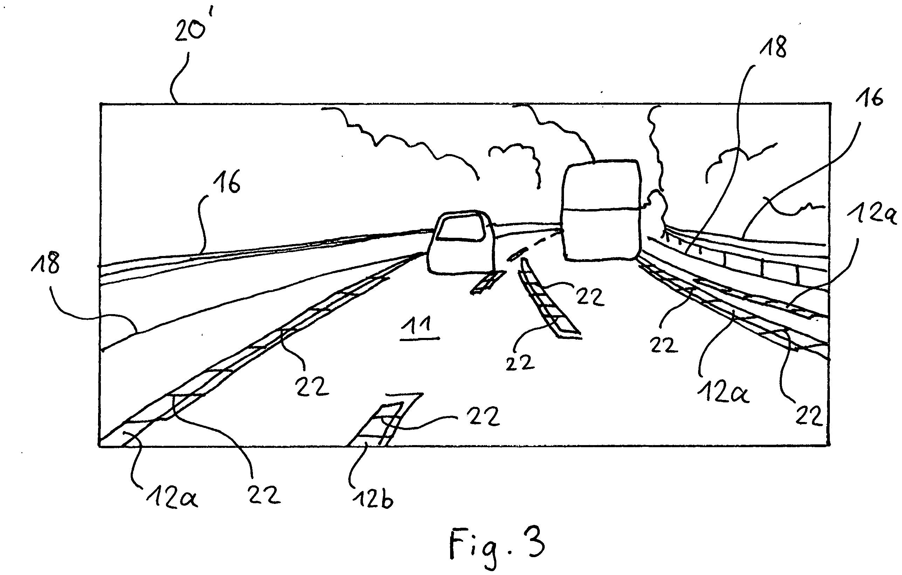

Gemäß Fig. 1 bewegt sich ein Kraftfahrzeug 10 auf der Fahrspur 11 einer Straße in einer Fahrtrichtung F vorwärts. Die Fahrspur 11 ist durch eine linke Fahrspurmarkierung 12a in Form einer durchgezogenen Linie und durch eine nicht dargestellte rechte Fahrspurmarkierung begrenzt. In einem vorderen Bereich des Fahrzeughimmels ist eine Kamera 14 angebracht, welche fortlaufend ein Bild des vor dem Kraftfahrzeug 10 befindlichen Verkehrsraumes erfasst, wie durch die Sichtstrahlen 15 dargestellt ist. Durch die Kameraposition wird das Weltkoordinatensystem x, y aufgespannt. Weiterhin ist die Kamera 14 mit einem nachgeordneten Bildverarbeitungs-Computer gekoppelt, welcher in Fig. 1 jedoch nicht dargestellt ist. Zwei Beispiele für von der Kamera 14 erfasste Bilder 20, 20' des vor dem Kraftfahrzeug 10 befindlichen Verkehrsraumes sind in Fig. 2 und 3 vereinfacht dargestellt.

Die Kamera 14 und der zugehörige Bildverarbeitungs-Computer sind Teil eines Fahrerassistenzsystems, beispielsweise eines Systems zum Unterstützen des Spurhaltens (Spurhalteassistent, lane departure warning system, LDW). Dieses System erkennt und verfolgt Fahrspurmarkierungen anhand der von der Kamera 14 in regelmäßigen Zeitabständen erfassten Bilder, wie nachfolgend genauer ausgeführt wird.

Zunächst werden mittels geeigneter, auf dem Fachgebiet bekannter Bildverarbeitungsalgorithmen in einem erfassten Bild 20, 20' alle potentiellen Fahrspurmarkierungen 12a, 12b, 12c, 16, 18 extrahiert, d.h. es werden diejenigen Bildbereiche als erkannte Fahrspurmarkierungen identifiziert, welche ein vorgegebenes Erkennungskriterium für Fahrspurmarkierungen erfüllen. Bei den so erkannten Fahrspurmarkierungen kann es z.B. sich um durchgezogene Linien 12a, schmale gestrichelte Linien 12b, breite gestrichelte Linien 12c, aber auch um Leitplanken 16 oder Straßenränder 18 handeln.

Ein dem Bildverarbeitungs-Computer zugeordnetes Verifizierungs- und Klassifizierungsmodul sorgt dafür, dass nur gültige Fahrspurmarkierungen 12a, 12b, 12c verfolgt werden und dass außerdem beim Verfolgen die Art der Fahrspurmarkierungen berücksichtigt wird.

Zu diesem Zweck definiert das Verifizierungs- und Klassifizierungsmodul für jede der erkannten Fahrspurmarkierungen, d.h. für jeden "Markierungs-Kandidat", einen Satz von zwanzig Prüfbereichen 22, welche jeweils der Position einer verfolgten Fahrspurmarkierung 12a, 12b, 12c in der Fahrbahnebene in einer bestimmten Entfernung vom Kraftfahrzeug 10 entsprechen. Die Lage der Prüfbereiche 22 innerhalb des Bildes 20, 20' wird jeweils dadurch bestimmt, dass die Position einer verfolgten Fahrspurmarkierung 12a, 12b, 12c in der Fahrbahnebene - also in Weltkoordinaten x, y - in einer vorbestimmten Entfernung vom Kraftfahrzeug 10 mittels geeigneter Projektionsgleichungen in Bildkoordinaten umgerechnet wird. Jeder Prüfbereich 22 umfasst mehrere Pixel des Bildes 20, 20' und erstreckt sich über einen bestimmten Bereich innerhalb der Fahrspurmarkierung 12a, 12b, 12c und gegebenenfalls in deren Umgebung hinein. Für jeden Prüfbereich 22 wird aus den Grauwerten der betreffenden Pixel ein Satz von statistischen Kenngrößen ermittelt, wie beispielsweise ein mittlerer Grauwert, ein maximaler Grauwert, ein minimaler Grauwert und/oder verschiedene Momente der Grauwertverteilung. Diese statistischen Kenngrößen bilden Merkmale oder Deskriptoren, die dem jeweiligen Kandidaten für Fahrspurmarkierungen zugeordnet sind.

Jede der Kenngrößen wird für alle zeitlich aufeinanderfolgenden Bilder 20, 20' ermittelt und als eine Funktion der Zeit verarbeitet. Da die aktuelle Geschwindigkeit des Kraftfahrzeugs 10 ermittelt wird, können die Funktionen der Zeit in Funktionen der zurückgelegten Fahrstrecke umgerechnet werden. Die erhaltenen Funktionen der zurückgelegten Fahrstrecke stellen den örtlichen Verlauf der Kenngrößen in der Fahrbahnebene dar. Zur Beschreibung der Funktionen wird im Weiteren ein Satz von statistischen Verlaufsmaßzahlen ermittelt, wie z.B. Mittelwert oder Standardabweichung.

Zusätzlich wird der zeitliche Verlauf der Kenngrößen einer Haar-Transformation unterzogen, wobei die dabei erhaltenen Haar-Koeffizienten ebenfalls dem Satz von Verlaufsmaßzahlen zugeordnet werden.

Für jeden Prüfbereich 22 liegt nun eine Vielzahl von extrahierten Merkmalen in Form von Kenngrößen und Verlaufsmaßzahlen vor, welche in ihrer Gesamtheit das optische Erscheinungsbild der betreffenden Fahrspurmarkierung und insbesondere deren zeitliche Variation relativ genau charakterisieren. Ein Klassifikator wählt nun unter Einsatz eines neuronalen Netzes und/oder einer Support Vector Machine bestimmte Merkmale aus der Vielzahl von Merkmalen aus und ordnet anhand der Werte der ausgewählten Merkmale die erkannte Fahrspurmarkierung einer von mehreren Fahrspurmarkierungs-Klassen zu. Konkret entscheidet der Klassifikator, ob es sich bei der erkannten Fahrspurmarkierung um ein ungültiges Bildobjekt wie eine Leitplanke 16 oder einen Straßenrand 18, um eine durchgezogene Linie 12a, um eine schmale gestrichelte Linie 12b oder um eine breite gestrichelte Linie 12c handelt. Es ist darauf hinzuweisen, dass das beschriebene Verfahren die Unterscheidung vieler weiterer gängiger Markierungstypen ermöglicht, wie z.B. doppelte gestrichelte Linien, gestrichelte und durchgezogene Linien und Linien mit Oberflächenprofil (botts' dots).

Um die vorgenommene Klassifizierung robuster zu machen, kann eine Fusion durchgeführt werden, indem jeweilige Kenngrößen von mehreren Prüfbereichen 22 einer erkannten Fahrspurmarkierung in unterschiedlichen Entfernungen vom Kraftfahrzeug 10 und jeweilige Kenngrößen eines einzelnen Prüfbereichs 22 in aufeinanderfolgenden Bildern 20, 20' miteinander verglichen und anhand des Ergebnisses des Vergleichs zu einer gemeinsamen Kenngröße zusammengeführt werden. Wenn z.B. für eine Fahrspurmarkierung neunzehn Kenngrößen auf einen Straßenrand hinweisen und eine Kenngröße auf eine gestrichelte Linie, so wird der letztgenannte Wert als Fehler verworfen und die Fahrspurmarkierung wird als Straßenrand eingestuft. Ferner wird ein statistisches Konfidenzmaß berechnet und ebenfalls der erkannten Fahrspurmarkierung zugeordnet. Ein besonderer Vorteil der Erfindung besteht darin, dass der Klassifikator eingelernt werden kann.

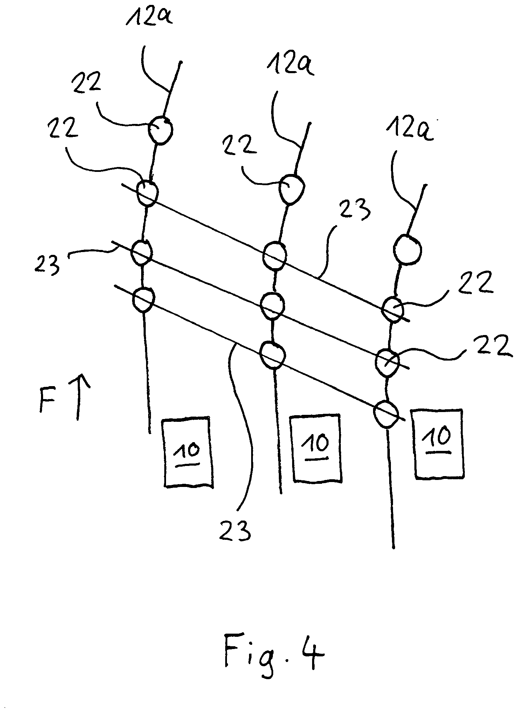

Im Rahmen der vorstehend beschriebenen Fusion werden die Ergebnisse des vorangegangenen Zeitschritts um die zurückgelegte Fahrstrecke verschoben und mit den aktuellen Positionen abgeglichen. Es wird somit während der Fusion eine Eigenbewegungskompensation durchgeführt. Die Robustheit dieses Verfahrens kommt insbesondere in den nahe am Kraftfahrzeug 10 befindlichen Bereichen zum Tragen, da diese Positionen mehrmals beobachtet werden. Die Fusion in Kombination mit der Eigenbewegungskompensation ist in Fig. 4 verdeutlicht, wobei korrespondierende Prüfbereiche 22 durch Linien 23 verbunden sind.

Vorzugsweise wird ein Zeitsignal über die Klassifikationsergebnisse für einen festen bestimmten Ort in Weltkoordinaten x, y gebildet. Die Klassifikationsergebnisse werden dann mittels der Eigenbewegungskompensation verschoben und es werden die Ergebnisse für einen bestimmten Punkt in der Welt fusioniert. Dies wird vorzugsweise rekursiv durchgeführt.

Alle erkannten Fahrspurmarkierungen, welche von dem Klassifikator als gültige Fahrspurmarkierungen 12a, 12b, 12c eingestuft wurden, werden als zu verfolgende Fahrspurmarkierungen einem Tracking-Prozess unterzogen, bei welchem die zeitliche Änderung des Verlaufs der Fahrspurmarkierung 12a, 12b, 12c in der Fahrbahnebene mittels eines Zustandsschätzers verfolgt wird. Diejenigen erkannten Fahrspurmarkierungen, welche von dem Klassifikator als "ungültige Fahrspurmarkierungen" 16, 18 eingestuft wurden, werden hingegen verworfen, also nicht verfolgt.

Das eigentliche Tracking, also das Verfolgen der zeitlichen Änderung des Verlaufs der Fahrspurmarkierungen 12a, 12b, 12c, wird bevorzugt von einem eigenständigen Modul durchgeführt und erfolgt mittels eines Zustandsschätzers, welcher auf einem Extended Kalman-Filter beruht.

Die Erfindung ermöglicht eine robuste Fahrspurerkennung auch in komplexen Verkehrssituationen wie der in Fig. 2 dargestellten Stadtverkehrs-Situation oder der in Fig. 3 dargestellten Baustellen-Situation, wobei auch mehrere Fahrspuren 11 sicher gehandhabt werden können.

### Bezugszeichenliste

- 10: Kraftfahrzeug
- 11: Fahrspur
- 12a, 12b, 12c: Fahrspurmarkierung
- 14: Kamera
- 15: Sichtstrahl
- 16: Leitplanke
- 18: Straßenrand
- 20, 20': erfasstes Bild
- 22: Prüfbereich
- 23: Linie

- F: Fahrtrichtung

## Patentansprüche

1. Verfahren zum Erkennen und Verfolgen von Fahrspurmarkierungen (12a, 12b, 12c) von einem Kraftfahrzeug (10) aus, an welchem eine Bilderfassungseinrichtung (14) angeordnet ist, wobei
mittels der Bilderfassungseinrichtung (14) in regelmäßigen Zeitabständen ein mehrere Bildpunkte umfassendes Bild (20, 20') eines vor dem Kraftfahrzeug (10) befindlichen Verkehrsraumes erfasst wird;
mittels eines Bildverarbeitungssystems in dem erfassten Bild (20, 20') diejenigen Bildbereiche als erkannte Fahrspurmarkierungen identifiziert werden, welche ein vorgegebenes Erkennungskriterium erfüllen; und
wenigstens eine erkannte Fahrspurmarkierung als zu verfolgende Fahrspurmarkierung (12a, 12b, 12c) einem Tracking-Prozess unterzogen wird, bei welchem die zeitliche Änderung des Verlaufs der Fahrspurmarkierung (12a, 12b, 12c) in der Fahrbahnebene mittels eines Zustandsschätzers verfolgt wird; dadurchgekennzeichnet,dass
für jede erkannte Fahrspurmarkierung wenigstens ein mehrere Bildpunkte des Bildes (20, 20') umfassender Prüfbereich (22) definiert wird;
anhand von Intensitätswerten der dem Prüfbereich (22) zugehörigen Bildpunkte wenigstens eine Kenngröße ermittelt wird; und
die erkannte Fahrspurmarkierung in Abhängigkeit von der Kenngröße einer von mehreren Fahrspurmarkierungs-Klassen zugeordnet wird.

2. Verfahren nach Anspruch 1,
**dadurch gekennzeichnet, dass**
jede erkannte Fahrspurmarkierung in Abhängigkeit von der Fahrspurmarkierungs-Klasse, welcher sie zugeordnet ist, als zu verfolgende Fahrspurmarkierung (12a, 12b, 12c) dem Tracking-Prozess unterzogen wird oder als ungültige Fahrspurmarkierung (16, 18) verworfen wird.

3. Verfahren nach einem der vorstehenden Ansprüche,
**dadurch gekennzeichnet, dass**
die Lage des Prüfbereichs (22) innerhalb des Bildes (20, 20') bestimmt wird, indem die Position einer verfolgten Fahrspurmarkierung (12a, 12b, 12c) in der Fahrbahnebene in einer vorbestimmten Entfernung vom Kraftfahrzeug (10) mittels eines Projektionsverfahrens in Bildkoordinaten umgerechnet wird.

4. Verfahren nach einem der vorstehenden Ansprüche,
dadurchgekennzeichnet,dass
aus den Intensitätswerten der dem Prüfbereich (22) zugehörigen Bildpunkte wenigstens eine statistische Kenngröße, vorzugsweise mehrere statistische Kenngrößen, beispielsweise ein mittlerer Intensitätswert, eine Intensitätswertsumme, ein maximaler Intensitätswert, ein minimaler Intensitätswert und/oder wenigstens ein Moment der Intensitätswertverteilung der Bildpunkte, ermittelt wird.

5. Verfahren nach einem der vorstehenden Ansprüche,
**dadurch gekennzeichnet, dass**
die Kenngröße für mehrere aufeinanderfolgende Bilder (20, 20') ermittelt wird und die Zuordnung der erkannten Fahrspurmarkierung zu der Fahrspurmarkierungs-Klasse zusätzlich anhand des zeitlichen Verlaufs der Kenngröße erfolgt.

6. Verfahren nach Anspruch 5,
dadurchgekennzeichnet,dass
die aktuelle Geschwindigkeit des Kraftfahrzeugs (10) ermittelt wird und anhand der Geschwindigkeit der zeitliche Verlauf der Kenngröße in einen örtlichen Verlauf der Kenngröße in der Fahrbahnebene umgerechnet wird, und wobei die Zuordnung der erkannten Fahrspurmarkierung zu der Fahrspurmarkierungs-Klasse anhand des örtlichen Verlaufs der Kenngröße erfolgt.

7. Verfahren nach Anspruch 5 oder 6,
dadurchgekennzeichnet,dass
zur Charakterisierung des zeitlichen Verlaufs der Kenngröße eine statistische Verlaufsmaßzahl ermittelt wird, insbesondere ein Mittelwert, eine Standardabweichung oder eine Varianz, und wobei die Zuordnung der erkannten Fahrspurmarkierung zu der Fahrspurmarkierungs-Klasse anhand der statistischen Verlaufsmaßzahl erfolgt.

8. Verfahren nach einem der Ansprüche 5 bis 7,
**dadurch gekennzeichnet, dass**
der zeitliche Verlauf der Kenngröße einer Zeit-Frequenz-Transformation unterzogen wird, insbesondere einer Fourier-Transformation oder einer Haar-Transformation, wobei die Zuordnung der erkannten Fahrspurmarkierung zu der Fahrspurmarkierungs-Klasse anhand der im Rahmen der Zeit-Frequenz-Transformation ermittelten Transformations-Koeffizienten erfolgt.

9. Verfahren nach Anspruch 8,
**dadurch gekennzeichnet, dass**
die Zeit-Frequenz-Transformation iterativ durchgeführt wird.

10. Verfahren nach einem der vorstehenden Ansprüche,
**dadurch gekennzeichnet, dass**
für jede erkannte Fahrspurmarkierung ein Satz von mehreren Prüfbereichen (22) definiert wird, welche jeweils der Position einer verfolgten Fahrspurmarkierung (12a, 12b, 12c) in der Fahrbahnebene in unterschiedlichen Entfernungen vom Kraftfahrzeug (10) entsprechen.

11. Verfahren nach Anspruch 10,
**dadurch gekennzeichnet, dass**
für jede erkannte Fahrspurmarkierung wenigstens 5 und bevorzugt wenigstens 15 Prüfbereiche (22) definiert werden.

12. Verfahren nach einem der vorstehenden Ansprüche,
**dadurch gekennzeichnet, dass**
die erkannte Fahrspurmarkierung einer Fahrspurmarkierungs-Klasse aus einer Gruppe von Fahrspurmarkierungs-Klassen zugeordnet wird, welche die Klassen "ungültiges Bildobjekt", "einzelne durchgezogene Linie", "doppelte durchgezogene Linie", "einzelne gestrichelte Linie", "doppelte gestrichelte Linie", "gestrichelte und durchgezogene Linie", "breite gestrichelte Linie" und "Linie mit Oberflächenprofil" umfasst.

13. Verfahren nach einem der vorstehenden Ansprüche,
dadurchgekennzeichnet,dass
für den oder jeden Prüfbereich (22) wenigstens 5 und bevorzugt wenigstens 10 unterschiedliche Kenngrößen ermittelt werden, wobei insbesondere das Zuordnen der erkannten Fahrspurmarkierungen zu einer Fahrspurmarkierungs-Klasse anhand einer Untergruppe der Kenngrößen erfolgt, welche durch ein Klassifizierungsverfahren ausgewählt wird.

14. Verfahren nach Anspruch 13,
**dadurch gekennzeichnet, dass**
das Klassifizierungsverfahren ein neuronales Netz und/oder eine Support Vector Machine verwendet.

15. Verfahren nach einem der vorstehenden Ansprüche,
**dadurch gekennzeichnet, dass**
jeweilige Kenngrößen von mehreren Prüfbereichen (22) einer erkannten Fahrspurmarkierung in unterschiedlichen Entfernungen vom Kraftfahrzeug (10) und/oder jeweilige Kenngrößen eines einzelnen Prüfbereichs (22) in aufeinanderfolgenden Bildern (20, 20') miteinander verglichen und anhand des Ergebnisses des Vergleichs zu einer gemeinsamen Kenngröße zusammengeführt werden, wobei bevorzugt anhand des Ergebnisses des Vergleichs ein statistisches Konfidenzmaß berechnet und der erkannten Fahrspurmarkierung zugeordnet wird.
